# EUROPEAN PATENT APPLICATION

(11) **EP 3 171 304 A1**
(43) Date of publication of application: **24.05.2017**
(21) Application number: 16196009.1
(22) Date of filing: 27.10.2016
(51) Int. Cl.: G06Q 10/06

(54) **RESOURCE OPERATION PLANNING ASSIST APPARATUS AND RESOURCE OPERATION PLANNING ASSIST METHOD**

(30) Priority: 20.11.2015 JP 2015227335
(71) Applicant: Hitachi, Ltd., Tokyo 100-8280 (JP)
(72) Inventor: YAMASHITA, Yuko, Chiyoda-ku, Tokyo 100-8280 (JP); TOMIYAMA, Tomoe, Chiyoda-ku, Tokyo 100-8280 (JP); MINAKAWA, Tsuyoshi, Chiyoda-ku, Tokyo 100-8280 (JP); SATOU, Tatsuhiro, Chiyoda-ku, Tokyo 100-8280 (JP); IWAMURA, Shigeki, Chiyoda-ku, Tokyo 100-8280 (JP)
(74) Representative: Gill, Stephen Charles

(57) **Abstract**

An object is to enable outputting of a proposal of solution to an inconsistency in a resource operation plan along with a forecast of an inconsistency-solved state and a predictive value of a predetermined evaluation index. A resource operation planning assist apparatus 101 includes: a storage device 102 storing an operation plan of a resource for use in a predetermined business; and a processor 105 configured to specify a change proposal for the operation plan for solving an inconsistency contained in the operation plan, by using a predetermined algorithm, determine success or failure in inconsistency solution in the operation plan with the change proposal applied thereto, by using a predetermined algorithm, and output information on the change proposal and information on the success or failure in the inconsistency solution to a predetermined device.

## Description

### [Technical Field]

The present invention relates to a resource operation planning assist apparatus and a resource operation planning assist method, and specifically relates to a technique capable of outputting a proposal of solution to an inconsistency in a resource operation plan along with a forecast of an inconsistency-solved state and a predictive value of a predetermined evaluation index.

### [Background Art]

There are cases where a train car trouble, an accident or the like causes a delay in a railway service timetable. In such cases, the plan of allocation of crews who are scheduled to work on trains is sometimes influenced and needs to be rescheduled. In view of this, there has been proposed a technique of presenting change proposals for crew operation information in such a situation. Specifically, there has been proposed, for example, a rescheduling assist system including a crew operation instruction system and a train timetable instruction system (see Patent Literature 1). The crew operation instruction system includes: a crew operation information storage device storing crew operation information being a current crew operation plan; an alert extraction part configured to receive information on a train timetable change proposal for restoring a disturbed train timetable from the train timetable instruction system, and extract as an alert a contradiction that appears in the crew operation information when the train timetable is changed to the train timetable change proposal; a proposal evaluation part configured to create a plurality of pieces of crew operation information change proposal-evaluation information each containing a crew operation information change proposal for solving the alert and evaluation information indicating an evaluation value of the crew operation information change proposal; a crew assist information display device configured to display the train timetable change proposal, the content of the alert and the pieces of crew operation information change proposal-evaluation information; and a proposal execution part configured to, upon selection of one of the pieces of crew operation information change proposal-evaluation information, replace the content of the crew operation information with the content of the crew operation information change proposal in the selected piece of crew operation information change proposal-evaluation information. The proposal evaluation part displays the created pieces of crew operation information change proposal-evaluation information on the crew assist information display device all at once in a list form.

### [Citation List]

### [Patent Literature]

[PTL 1] Japanese Patent Application Laid-open Publication No. 2013-35502

### [Summary of Invention]

### [Technical Problems]

In the conventional technique, in response to selection of the change proposal for the operation plan by the user, information is presented about the capacity of transportation, the time taken to recover delay, the remaining number of alerts and the amounts of change in these items. However, no information is presented about a forecast of change operation following the application of the change proposal such as the number of times the operation plan needs to be changed to solve all the contradictions which remain even after the application of the change proposal (including those occurring due to the application of the change proposal; hereinafter, inconsistencies).

For this reason, even when the inconsistency designated by the user is solved, the operation plan might still need many changes to solve the other remaining inconsistencies. In other cases, changes may be applied one after another to the operation plan against the inconsistencies, but doing so might end up in a dead-end situation at some point and fail to solve all the inconsistencies.

In view of this, an object of the present invention is to provide a technique capable of outputting a proposal of solution to an inconsistency in a resource operation plan along with a forecast of an inconsistency-solved state and a predictive value of a predetermined evaluation index.

### [Solution to Problems]

A resource operation planning assist apparatus of the present invention for solving the problems mentioned above includes: a storage device storing an operation plan of a resource for use in a predetermined business; and a processor configured to specify a change proposal for the operation plan for solving an inconsistency contained in the operation plan, by using a predetermined algorithm, determine success or failure in inconsistency solution in the operation plan with the change proposal applied thereto, by using a predetermined algorithm, and output information on the change proposal and information on the success or failure in the inconsistency solution to a predetermined device.

Also, a resource operation planning assist method of the present invention includes causing an information processor including a storage device storing an operation plan of a resource for use in a predetermined business, to specify a change proposal for the operation plan for solving an inconsistency contained in the operation plan, by using a predetermined algorithm, determine success or failure in inconsistency solution in the operation plan with the change proposal applied thereto, by using a predetermined algorithm, and output information on the change proposal and information on the success or failure in the inconsistency solution to a predetermined device. Further aspects of the present invention provide: a computer program comprising code which, when run on a computer, causes the computer to perform the resource 40 operation planning assist method; and a computer readable medium storing a computer program comprising code which, when run on a computer, causes the computer to perform the resource operation planning assist method..

### [Advantageous Effects of Invention]

According to the present invention, a proposal of solution to an inconsistency in a resource operation plan can be outputted along with a forecast of an inconsistency-solved state and a predictive value of a predetermined evaluation index.

### [Brief Description of Drawings]

[Fig. 1] Fig. 1 is a diagram showing a system configuration of a resource operation planning assist apparatus according to an embodiment.
[Fig. 2] Fig. 2 is a diagram showing Flow Example 1 of a resource operation planning assist method according to the embodiment.
[Fig. 3] Fig. 3 is a diagram showing Screen Example 1 according to the embodiment.
[Fig. 4] Fig. 4 is a diagram showing Flow Example 2 of the resource operation planning assist method according to the embodiment.
[Fig. 5] Fig. 5 is a diagram showing Flow Example 3 of the resource operation planning assist method according to the embodiment.
[Fig. 6] Fig. 6 is a diagram showing Flow Example 4 of the resource operation planning assist method according to the embodiment.
[Fig. 7] Fig. 7 is a diagram showing Flow Example 5 of the resource operation planning assist method according to the embodiment.
[Fig. 8] Fig. 8 is a diagram showing Flow Example 6 of the resource operation planning assist method according to the embodiment.
[Fig. 9] Fig. 9 is a diagram showing Screen Example 2 according to the embodiment.
[Fig. 10] Fig. 10 is a diagram showing Flow Example 7 of the resource operation planning assist method according to the embodiment.
[Fig. 11] Fig. 11 is a diagram showing Screen Example 3 according to the embodiment.
[Fig. 12] Fig. 12 is a diagram showing Screen Example 4 according to the embodiment.
[Fig. 13] Fig. 13 is a diagram showing Screen Example 5 according to the embodiment.
[Fig. 14] Fig. 14 is a diagram showing a flow example of a resource operation planning assist method according to another embodiment.
[Fig. 15] Fig. 15 is a diagram showing a screen example according to the other embodiment.

### [Description of Embodiments]

### Example of Apparatus Configuration

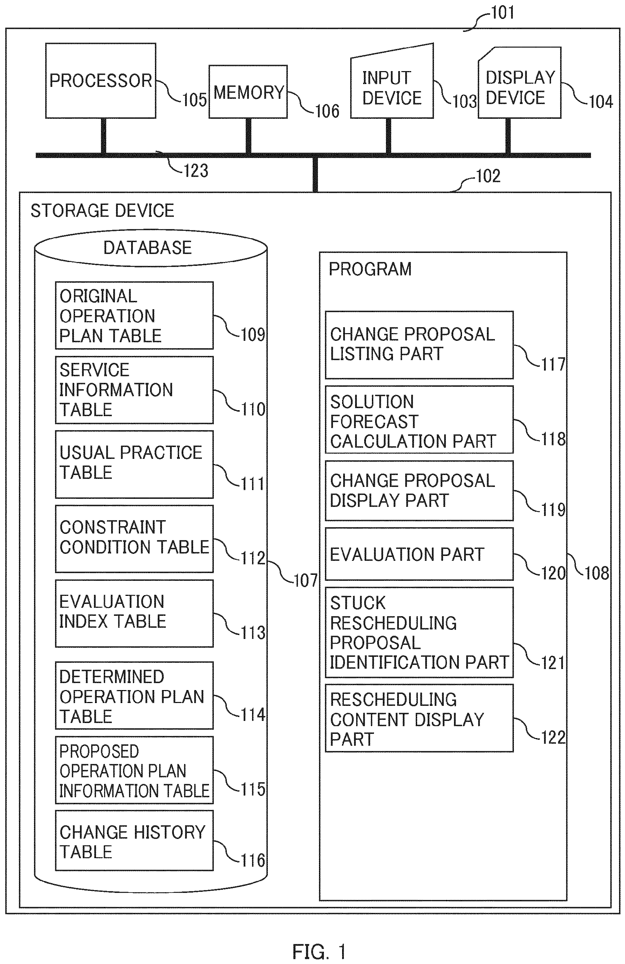

Embodiments of the present invention will be described below in detail with reference to the drawings. Fig. 1 is a diagram showing a system configuration example of a resource operation planning assist apparatus 101 according to an embodiment. The resource operation planning assist apparatus 101, shown in Fig. 1, is a computer apparatus capable of outputting proposals of solution to inconsistencies in a resource operation plan along with forecasts of the inconsistency-solved state and predictive values of one or more predetermined evaluation indexes. Thus, by displaying change proposals for the operation plan against individual inconsistencies along with forecasts of possibility of solving inconsistency, the resource operation planning assist apparatus 101 can prevent a situation where a user inputs information designating a change to the operation plan that will eventually lead to a dead end, and also present, as a selectable choice, a change proposal for the operation plan that allows quick inconsistency solution.

Note that, as an example, this embodiment assumes an information processor such as a server apparatus configured to handle railway crews as resources and assist crew operation planning. Also, the description will be given under the assumption that the inconsistency in the operation plan to be processed (hereinafter, "violation") is a single violation selected by a user such as a person in charge of planning. The present invention is not of course limited to this instance and targets a plurality of violations selected by the user or a violation(s) detected by the resource operation planning assist apparatus 101, for example.

Also, for various types of processing involved in the resource operation planning, this resource operation planning assist apparatus 101 uses existing mathematical programming algorithms as appropriate such as linear programming and a branch and bound method, for example. In practice, the resource operation planning assist apparatus 101 performs plan creation and the like by reading a program corresponding to the algorithms described above as needed out of a storage device 102 and executing the program (the same applies below).

As exemplarily shown in Fig. 1, a hardware configuration of the resource operation planning assist apparatus 101 is as follows. The resource operation planning assist apparatus 101 includes: a storage device 102 including an appropriate non-volatile storage element such as an SSD (Solid State Drive) or a hard disk drive; a memory 106 including a volatile storage element such as a RAM; a processor 105 such as a CPU configured to perform integrated control of the apparatus itself by, for example, reading a program 108 held in the storage device 102 into the memory 106 and executing the program 108, and to perform various types of determination, arithmetic and control processing; an input device 103 configured to receive a key input and a voice input from a user; and a display device 104 such as a display configured to display processing data. Also, these components are coupled to each other through a data bus 123.

Note that the resource operation planning assist apparatus 101 may be coupled to an external terminal apparatus through a predetermined communication network. Also, the storage device 102 stores at least the program 108 for implementing functions necessary for the resource operation planning assist apparatus according to this embodiment, and a database 107.

Among these, the database 107 stores an original operation plan table 109, a service information table 110, a usual practice table 111, a constraint condition table 112, an evaluation index table 113, a determined operation plan table 114, a proposed operation plan information table 115 and a change history table 116.

Among these, the original operation plan table 109 is information on the operation that has been planned before the user selects a violation to be solved, and includes items of trains' starting stations, terminal stations, departure times at the starting stations and arrival times at the terminal stations added to route information to be described later.

Also, the service information table 110 is a so-called train timetable defining the routes and schedules of transportation services for each minimum unit. For example, a train is the minimum unit in a railway transportation service, and is defined by the stations which the train stops at or passes between its starting station and terminal station and by the time of arrival, departure or passage at each of the stations. Among these times, those at and before the current time are the past record, i.e. the times of occurrence of actual past events, while those after the current time are predicted times calculated from the original plan and the past record. These times are continually updated at timings set by a predetermined service management system, transmitted from the service management system through a network, and stored in the service information table 110 in the resource operation planning assist apparatus 101.

Also, the usual practice table 111 stores, for each type of violation, operation change proposals and train timetable change proposals frequently used to solve inconsistencies in the crew operation plan that disable the crew operation or train service, e.g. violations such as lack of connection time for a crew and suspension of a train. For example, as usual practices against an operational connection time violation, the usual practice table 111 stores change proposals such as use of a spare crew, change of the route to the route of the crew on the following train and change of the departure time.

Also, the constraint condition table 112 stores various constraint conditions to be considered in rescheduling proposal creation processing to be executed on the whole operation plan by a later-described solution forecast calculation part 118 for calculation of a forecast of solution.

Also, the evaluation index table 113 is a table for designating one or more evaluation indexes to be also displayed by a later-described change proposal display part 119 when it displays forecasts of solution, and also for storing the contents of evaluation indexes to be considered in the above rescheduling proposal creation processing and their weights.

Also, the determined operation plan table 114 is operation plan information determined by a change proposal approved and applied by the user among listed change proposals and the past record.

Also, the proposed operation plan information table 115 is rescheduling proposal information calculated by the above-described solution forecast calculation part 118 and a later-described stuck rescheduling proposal identification part 121, and stores change proposals listed by a change proposal listing part 117 and operation plan information provided as rescheduling proposal information for each change proposal. The proposed operation plan information table 115 also stores operation change and train timetable change contents which are rescheduling contents calculated by the solution forecast calculation part 118 and the stuck rescheduling proposal identification part 121, as well as conditions relaxed for change proposals identified by the stuck rescheduling proposal identification part 121 as change proposals with feasible solutions and the contents of the relaxations. The change history table 116 is a table storing change proposals against solved violations and the history of processed changes, and is referred to upon an input from the user to display the change history.

On the other hand, the functional parts implemented by the above-mentioned program 108 include the change proposal listing part 117, the solution forecast calculation part 118, the change proposal display part 119, an evaluation part 120, the stuck rescheduling proposal identification part 121 and a rescheduling content display part 122.

Among these, the change proposal listing part 117 is configured to list, as change candidates for solving a specified violation, switching the route to an operationally connectable route and allocation as well as operation changes and train timetable changes stored in the usual practice table 111.

Also, the solution forecast calculation part 118 is configured to calculate a forecast of solution for each candidate listed by the change proposal listing part 117 by creating a rescheduling proposal for the whole operation plan with the candidate applied thereto. Also, the change proposal display part 119 is configured to display change proposals against a specified violation along with the forecasts of solution calculated by the solution forecast calculation part.

Also, the evaluation part 120 is configured to calculate predictive values of the evaluation indexes.

Also, the stuck rescheduling proposal identification part 121 is configured to determine whether or not there is a feasible solution for a change proposal having no feasible solution in the result of the rescheduling by the above-mentioned solution forecast calculation part 118 if a one or more relaxable constraint conditions are relaxed for the change proposal. The stuck rescheduling proposal identification part 121 is configured to calculate a forecast of solution for a change proposal with such a feasible solution and extract the contents of the constraint conditions thus relaxed.

Also, the rescheduling content display part 122 is configured to individually display the operation change and train timetable change contents in the operation change proposals after solving the violation calculated by the above-mentioned solution forecast calculation part 118.

### Flow Example 1

Actual procedures of a resource operation planning assist method according to this embodiment will be described below with reference to drawings. Various operations corresponding to the resource operation planning assist method to be described below are realized by the program 108 read into the memory 106 and the like and executed by the resource operation planning assist apparatus 101. Also, the program 108 includes codes for performing the various operations to be described below.

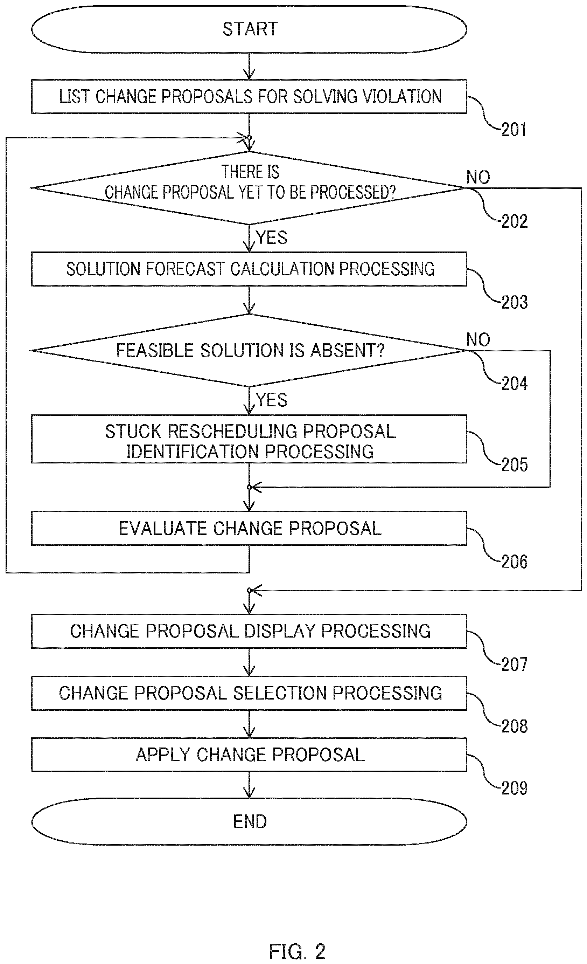

Fig. 2 is a diagram showing Flow Example 1 of the resource operation planning assist method according to this embodiment. Specifically, Fig. 2 shows the flow of processing executed by the resource operation planning assist apparatus 101 upon receipt of a violation to be solved selected by the user through the input device 103.

First, in Step 201, the change proposal listing part 117 lists operation changes and train timetable changes as change proposal candidates for solving the violation selected by the user among violations displayed on a given screen. These operation changes and train timetable changes as change proposal candidates are allocation to a crew at an operationally connectable station, i.e., a crew present at a connection station at the connection time of the corresponding train shown in the service information table 110, and switching of the route to the route of this crew, as well as operation changes and train timetable changes (such as change of the departure time and suspension) stored in the usual practice table 111.

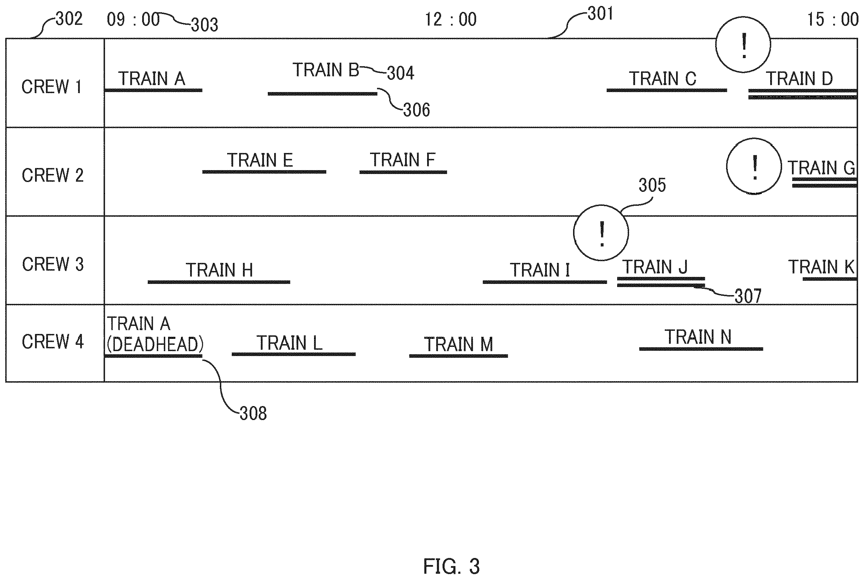

Meanwhile, the route mentioned above defines the sequence in which one resource operates minimum units of a transportation service. For example, the route of a single railway crew is route information listing pieces of train information allocated to the crew with the crew's train connection, recess period and attendance and leaving times taken into consideration (see Fig. 3).

Here, a piece of train information is a train name or train ID uniquely identifying a train. For example, Fig. 3 shows how trains are allocated to each of four crews "crew 1" to "crew 4" (based on the original operation plan table 109). Specifically, one crew is allocated to a train A, a train B, a train C and a train D. Similarly, another crew is allocated to a train E, a train F and a train G, and yet another crew is allocated to a train H, a train I, a train J and a train K. Moreover, still another crew is allocated to a train L, a train M and a train N.

"Train A (Deadhead)" on the route of the "crew 4" in Fig. 3 indicates that the "crew 4" deadheads on the "train A", specifically, the "crew 1" works on the "train A" but the "crew 4" also rides the "train A" to move to another station.

Then in Step 202, for example, the solution forecast calculation part 118 determines whether or not there is a change proposal yet to be processed among the operation change proposals and train timetable change proposals listed by the change proposal listing part 117 in above Step 201.

If the result of the above determination indicates that there is a change proposal yet to be processed (202: YES), the processing advances to Step 203. On the other hand, if there is no change proposal yet to be processed (202: NO), the processing advances to Step 207.

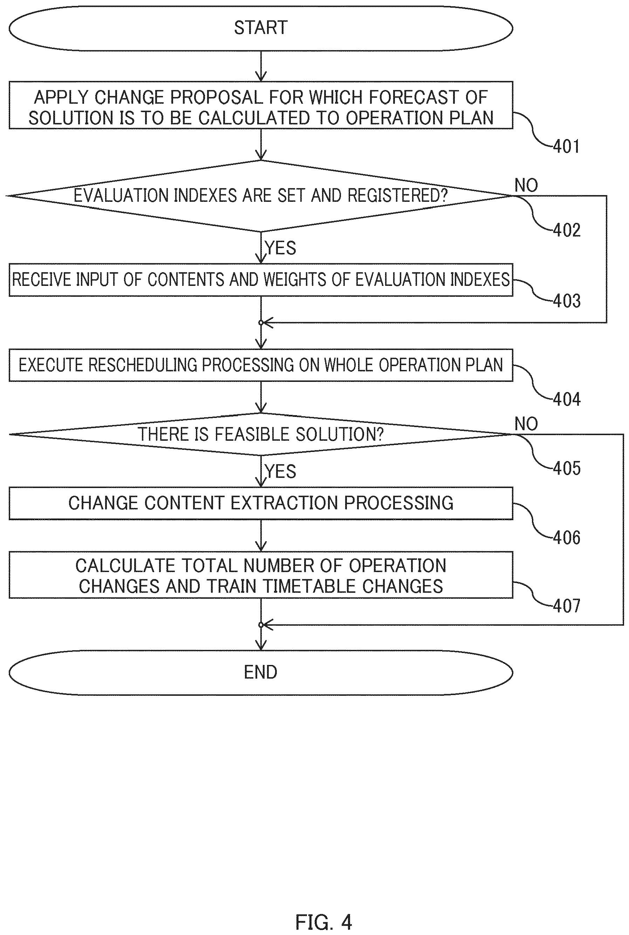

In Step 203, the solution forecast calculation part 118 applies the to-be-processed change proposal specified in above Step 202, or the change proposal of interest, to the operation plan (the resource operation plan shown by the original operation plan table 109). Then, fixing the applied change and the operation plan stored in the determined operation plan table 114, the solution forecast calculation part 118 redesigns (reschedules) the whole operation plan in such a way as to solve the remaining violations, and calculates a forecast of solution of each violation. Details of this processing will be described later with reference to diagrams in and following Fig. 4.

In Step 204, the solution forecast calculation part 118 determines whether or not the result of the processing in above Step 203 contains a feasible solution, i.e. a solution for the change proposal that settles (solves) each violation. If there is no feasible solution (204: YES), the processing advances to Step 205. On the other hand, if there is a feasible solution (204: NO), the processing advances to Step 206.

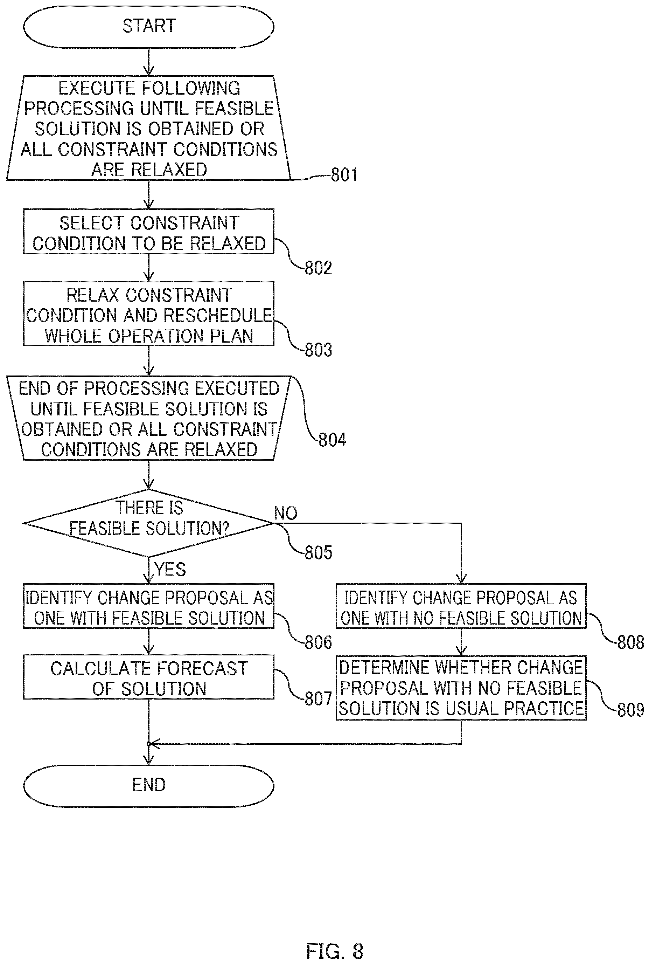

In Step 205, the stuck rescheduling proposal identification part 121 executes stuck rescheduling proposal identification processing. Details of this processing will be described later with reference to Fig. 8.

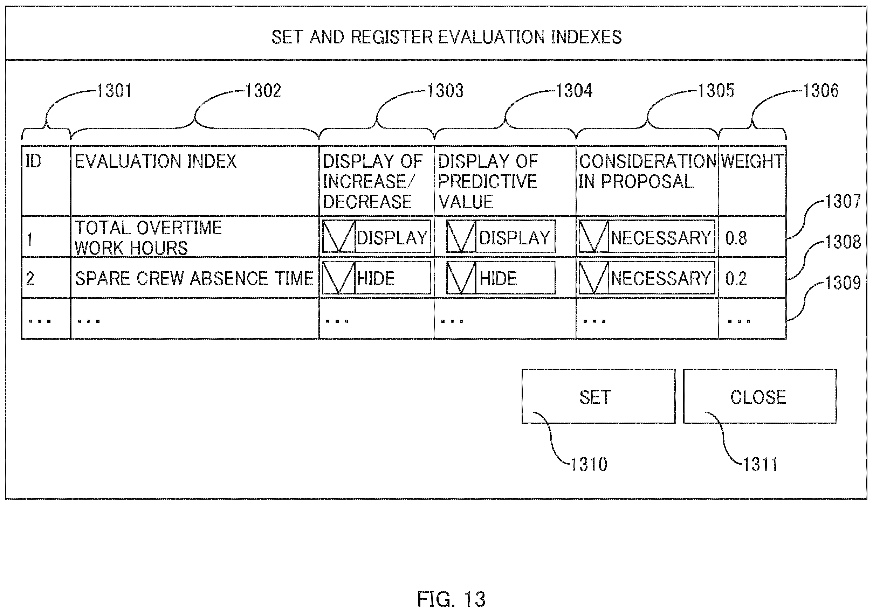

In Step 206, the evaluation part 120 executes processing of evaluating the change proposal. Specifically, if it is determined in above Step 204 that there is a feasible solution or if the stuck rescheduling proposal identification part 121 identifies the change proposal as one with a feasible solution in Step 205, the evaluation part 120 calculates the values of the evaluation indexes for the whole operation plan in the rescheduling result, the evaluation indexes being set by the user through an input screen in Fig. 13 displayed on the display device 104.

For example, "total overtime work hours" is a predictive value of the total of the overtime work hours of the crews. This predictive value is, for example, the total value of the overtime work hours under the condition where the change proposal is applied to the operation plan and the other violations are then solved (the overtime work hours in the whole operation plan in the rescheduling result). Various conventional methods are available for this computation method. For example, the predictive value may be obtained by comparing the final arrival time of the finally allocated train indicated by the route information on each crew in the information on the routes planned before the start of the service, and the final arrival time of the finally allocated train in the route information on the same crew in the proposed operation plan information table 115, and calculating the total of the excess work hours on the crew routes.

Also, the evaluation part 120 calculates this value similarly for the original operation plan table 109 and for the proposed operation plan information table 115 to also calculate the value of increase or decrease in overtime work hours, and sets it as the value of increase or decrease in total overtime work hours that results from the application of the change proposal. Also, the spare crew absence time is the total amount of time for which a spare crew capable of handling an operation violation is absent. The space crew absence time has to be decreased because it causes lack of crew in service disruption. This spare crew absence time is obtained by calculating the total amount of time for which all the spare crews on the all the spare crew routes in the proposed operation plan information table 115 are allocated to trains.

The resource operation planning assist apparatus 101 executes the above processing in each step (202 to 206) on each of the change proposals listed by the change proposal listing part 117, and then advances to Step 207.

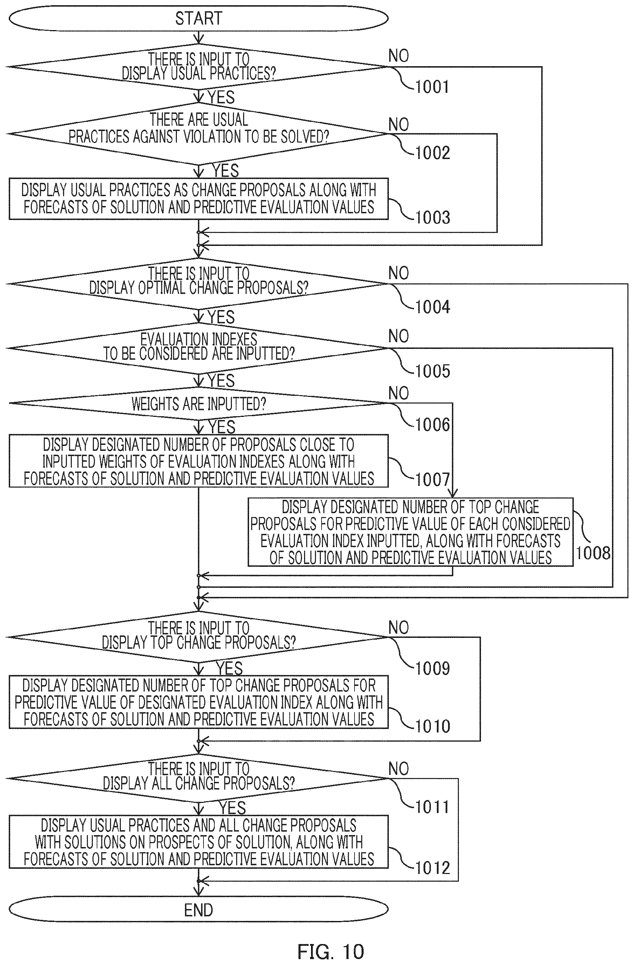

In Step 207, the change proposal display part 119 executes change proposal display processing. Details of this processing will be described later with reference to Fig. 10.

Then in Step 208, the resource operation planning assist apparatus 101 executes change proposal selection processing. In this case, among the operation change and train timetable change proposals displayed by the change proposal display part 119 and the rescheduling content display part 122 in above Step 207, the resource operation planning assist apparatus 101 acquires a change proposal to be applied to the violation selected by the user by reference to the forecasts of solution, the predictive evaluation values and the like or acquires information on part of the rescheduling content (a series of changes up to a change selected by the user).

Thereafter in Step 209, the resource operation planning assist apparatus 101 applies the change proposal or operation change proposal selected by the user in above Step 208 to the operation plan. The applied change proposal is stored in the determined operation plan table 114 and is fixed when rescheduling is executed later. Also, the displayed change proposals, forecasts of solution, predictive evaluation values and the like are stored in the change history table 116 along with the content selected by the user, and will be referred to for display of the change history upon an input from the user to display the change history.

Fig. 3 is a diagram showing a screen example according to this embodiment. In this embodiment, an example is shown in which the screen displays crews on the vertical axis and time on the horizontal axis. It is of course possible to display a timetable in which time is on the horizontal axis and distance is on the vertical axis and line segments representing trains are coupled to indicate operation.

This screen shows the allocation of trains to each crew. The resource operation planning assist apparatus 101 designs this train allocation by reflecting the current service condition in the service information table 110 based on the original operation plan table 109, for example.

Also, this screen includes allocation information 301, crew name 302 and horizontal axis 303 as its display elements. Among these, the horizontal axis 303 indicates time. Also, the crew name 302 indicates names uniquely identifying crews. Also, the allocation information 301 indicates the allocation of trains to the crews shown under the crew name 302. Each allocated train is shown as a single horizontal bar (e.g. horizontal bar 306), and its train name (e.g. train name 304) is displayed near the horizontal bar. Meanwhile, "(Deadhead)" is attached to the train name to indicate deadheading on the train. For example, reference sign 308 indicates that the crew 4 deadheads on the train A on which the crew 1 works.

On this screen, reference sign 305 denotes a violation mark indicating a violation, and reference sign 307 is a violation bar. The violation mark 305 is a mark which the resource operation planning assist apparatus 101 displays for allocation with which the service cannot be executed as planned such as allocation with lack of operational connection time or an operational connection station violation. Similarly, the violation bar 307 indicates an allocated train with a violation. The resource operation planning assist apparatus 101 displays this screen on the display device 104, and executes the processing in each step in the flow in above Fig. 2 upon receipt of a user input selecting a violation to be solved, e.g. an input selecting the violation mark 305 or the violation bar 307, through the input device 103.

### Flow Example 2

Fig. 4 is a flowchart showing the processing by the solution forecast calculation part 118, or the "solution forecast calculation processing", in Step 203 in the flow in Fig. 2. In the processing, in Step 401 in this flow, the solution forecast calculation part 118 applies the change proposal of interest in the iterative processing in above Step 202, i.e., the change proposal for which a forecast of solution after its application is to be calculated, to the original operation plan table 109.

Then in Step 402, the solution forecast calculation part 118 determines whether or not evaluation indexes have been set and registered. Specifically, the solution forecast calculation part 118 determines whether or not evaluation indexes to be considered have been set and registered as user inputs in the evaluation index table 113. If evaluation indexes have been set and registered (402: YES), the solution forecast calculation part 118 advances to Step 403.

On the other hand, if no evaluation index has been set and registered (402: NO), the solution forecast calculation part 118 advances to Step 404.

In Step 403, the solution forecast calculation part 118 receives inputs of the contents and weights of the evaluation indexes. Specifically, the solution forecast calculation part 118 acquires the contents and weights of the evaluation indexes set and registered in the evaluation index table 113 when calculating the forecast of solution.

In Step 404, fixing the change applied in above Step 401 and the operation plan stored in the determined operation plan table 114, the solution forecast calculation part 118 reschedules the whole operation plan stored in the original operation plan table 109 in such a way as to solve the remaining violations.

As a method of this rescheduling, the solution forecast calculation part 118 may use a conventional technique for calculating a rescheduling proposal satisfying the constraint conditions specified in the constraint condition table 112, or create a rescheduling proposal by selecting rules (or patterns) one after another that are suitable for the situation from rescheduling proposals defined as sets of rules in advance.

In Step 405, the solution forecast calculation part 118 determines whether or not there is a feasible solution in the result of the above rescheduling. If determining that there is a feasible solution (405: YES), the solution forecast calculation part 118 advances to Step 406. On the other hand, if determining that there is no feasible solution (405: NO), the solution forecast calculation part 118 terminates this flow and the processing advances to Step 205.

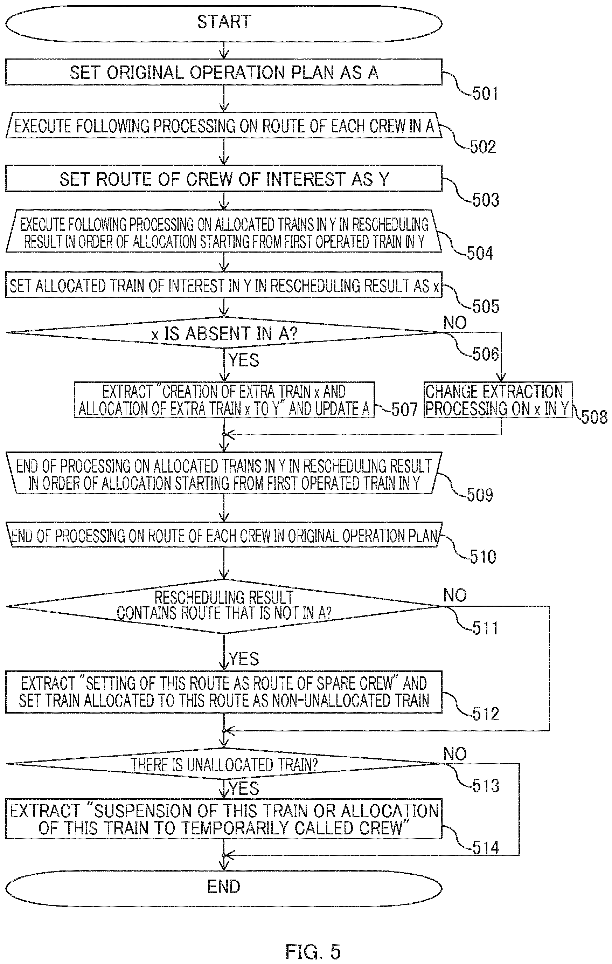

In Step 406, the solution forecast calculation part 118 executes change content extraction processing. Details of this processing will be described later with reference Fig. 5.

In Step 407, the solution forecast calculation part 118 calculates the remaining number of changes to be made as the forecast of solution. In this case, the solution forecast calculation part 118 calculates the number of operation changes and train timetable changes extracted in above Step 406. The solution forecast calculation part 118 then terminates this flow.

### Flow Example 3

Fig. 5 is a flowchart showing an example of details of the "change content extraction processing" in Step 406 for extracting the change contents one by one from the result of the rescheduling of the whole operation plan. In this case, in Step 501, the solution forecast calculation part 118 sets the original operation plan stored in the original operation plan table 109 as "A". The solution forecast calculation part 118 then executes the following processing on the route of each crew in this "A".

Specifically, in Step 503, the solution forecast calculation part 118 sets the route of the crew of interest as "Y". The solution forecast calculation part 118 executes the following processing on the allocated trains in "Y" in the rescheduling result in the order of allocation starting from the first operated train in Y. In Step 505, the solution forecast calculation part 118 sets the allocated train of interest in Y in the rescheduling result as x.

In Step 506, the solution forecast calculation part 118 determines whether or not x mentioned above is absent in A. If determining that x is absent in A (506: YES), the solution forecast calculation part 118 advances to Step 507. On the other hand, if determining that x is present in A (506: NO), the solution forecast calculation part 118 advances to Step 508.

In Step 507, the solution forecast calculation part 118 extracts "creation of an extra train x and allocation of the extra train x to Y" as a train timetable change, and applies this change to "A" mentioned above to update this A.

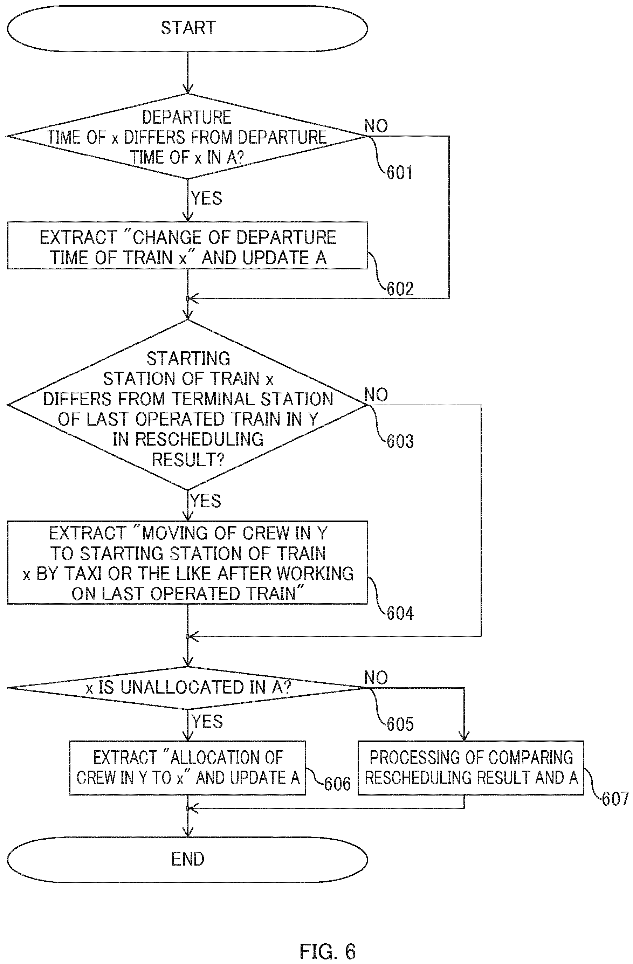

On the other hand, in Step 508, the solution forecast calculation part 118 executes change extraction processing on x in Y mentioned above. Details of this processing will be described later with reference to Fig. 6.

The solution forecast calculation part 118 executes the above processing on the allocated trains in Y in the rescheduling result in the order of allocation starting from the first operated train in Y. Also, the solution forecast calculation part 118 executes the above processing on the routes of all the crews in A one after another.

In Step 511, the solution forecast calculation part 118 determines whether or not the rescheduling result contains a route that is not in "A". If determining that the rescheduling result contains a route that is not in "A" (511: YES), the solution forecast calculation part 118 advances to Step 512. On the other hand, if determining that the rescheduling result does not contain a route that is not in "A" (511: NO), the solution forecast calculation part 118 advances to Step 513.

In Step 512, the solution forecast calculation part 118 extracts "setting of this route as the route of a spare crew" as an operation change content, and sets the train(s) allocated in this route as a non-unallocated train(s).

In Step 513, the solution forecast calculation part 118 determines whether or not there is an unallocated train in "A". If determining that there is an unallocated train in "A" (513: YES), the solution forecast calculation part 118 advances to Step 514. On the other hand, if determining that there is no unallocated train in "A" (513: NO), the solution forecast calculation part 118 terminates this flow.

In Step 514, the solution forecast calculation part 118 extracts "suspension of this train or allocation of this train to a temporarily called crew" as a train timetable change or operation change content. The solution forecast calculation part 118 then terminates this flow.

### Flow Example 4

Fig. 6 is a flowchart showing the content of the change extraction processing on x in Y in above Fig. 5. In this case, in Step 601, the solution forecast calculation part 118 determines whether or not the departure time of x differs from the departure time of x in A. If determining that the departure time of x differs from the departure time of x in A (601: YES), the solution forecast calculation part 118 advances to Step 602. On the other hand, if determining that the departure time of x is the same as the departure time of x in A (601: NO), the solution forecast calculation part 118 advances to Step 603.

In Step 602, the solution forecast calculation part 118 extracts "change of the departure time of the train x (e.g. delaying of the departure time by five minutes)" as a train timetable change content and updates "A". The delayed time is the difference between the departure time of x and the departure time of x in A.

In Step 603, the solution forecast calculation part 118 determines whether or not the starting station of the train x differs from the terminal station of the last operated train (the train which is immediately before x and on which the crew is to work or deadhead) in Y in the rescheduling result. If determining that the starting station of the train x differs from the terminal station of the last operated train in Y in the rescheduling result (603: YES), the solution forecast calculation part 118 advances to Step 604. On the other hand, if determining that the starting station of the train x is the same as the terminal station of the last operated train in Y in the rescheduling result (603: NO), the solution forecast calculation part 118 advances to Step 605.

In Step 604, the solution forecast calculation part 118 extracts "moving of the crew in Y to the starting station of the train x by a different transportation such as a taxi after working on the last operated train" as an operation change content and updates "A".

In Step 605, the solution forecast calculation part 118 determines whether or not x is unallocated in A. If determining that x is unallocated in A (605: YES), the solution forecast calculation part 118 advances to Step 606. On the other hand, if determining that x is not unallocated in A (605: NO), the solution forecast calculation part 118 advances to Step 607.

In Step 606, the solution forecast calculation part 118 extracts "allocation of the crew in Y to x" as an operation change content and updates "A". Then, the solution forecast calculation part 118 terminates this flow.

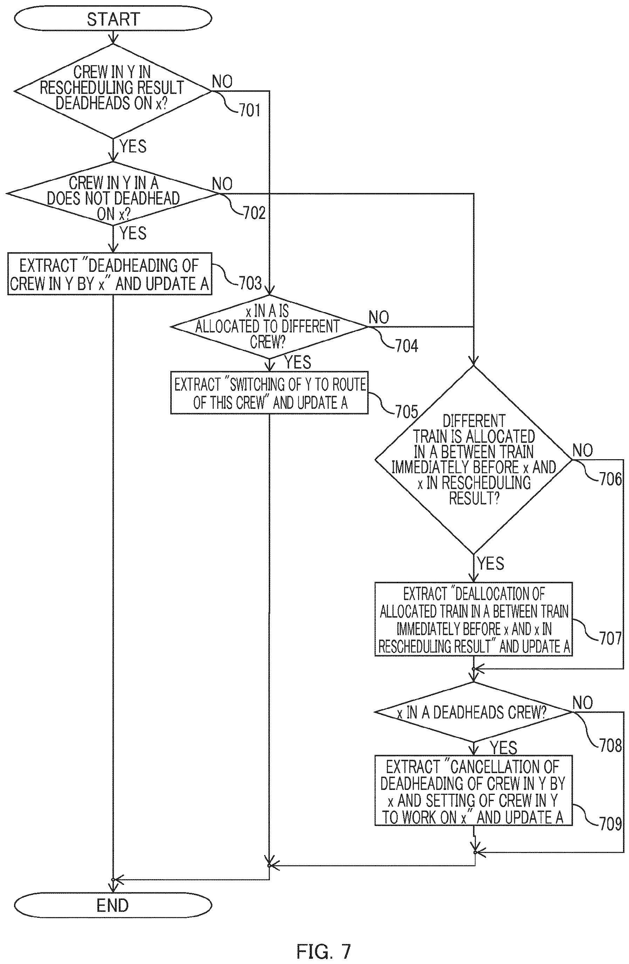

In Step 607, the solution forecast calculation part 118 executes processing of comparing the rescheduling result and A. This processing will be described later with reference to Fig. 7. The solution forecast calculation part 118 then terminates this flow.

### Flow Example 5

Fig. 7 is a flowchart showing the content of the processing of comparing the rescheduling result and A in above Fig. 6. In this case, in Step 701, the solution forecast calculation part 118 determines whether or not the crew in Y in the rescheduling result deadheads on x. If determining that the crew in Y deadheads on x (701: YES), the solution forecast calculation part 118 advances to Step 702. On the other hand, if determining that the crew in Y does not deadhead on x (701: NO), the solution forecast calculation part 118 advances to Step 704.

In Step 702, the solution forecast calculation part 118 determines whether or not the crew in Y in A does not deadhead on x. If determining that the crew in Y in A does not deadhead on x (702: YES), the solution forecast calculation part 118 advances to Step 703. On the other hand, if determining that the crew in Y in A deadheads on x (702: NO), the solution forecast calculation part 118 advances to Step 706. In Step 703, the solution forecast calculation part 118 extracts "deadheading of the crew in Y by x" as an operation change content and updates A. The solution forecast calculation part 118 then terminates this flow.

In Step 704, the solution forecast calculation part 118 determines whether or not x in A is allocated to a different crew. If determining that x in A is allocated to a different crew (704: YES), the solution forecast calculation part 118 advances to Step 705. On the other hand, if determining that x in A is also allocated to the crew in Y (704: NO), the solution forecast calculation part 118 advances to Step 706.

In Step 705, the solution forecast calculation part 118 extracts "switching of Y to the route of this crew (the crew of x in A)" as an operation change content along with the trains of both crews who are switching their routes, and updates A. The solution forecast calculation part 118 then terminates this flow.

In Step 706, the solution forecast calculation part 118 determines whether or not there is a different train allocated in A between the train operated immediately before x and x in the rescheduling result. If determining that there is a different train allocated in A between the train operated immediately before x and x in the rescheduling result (706: YES), the solution forecast calculation part 118 advances to Step 707. On the other hand, if determining that there is not a different train allocated in A between the train operated immediately before x and x in the rescheduling result (706: NO), the solution forecast calculation part 118 advances to Step 708. In Step 707, the solution forecast calculation part 118 extracts "deallocation of the allocated train in A between the train operated immediately before x and x in the rescheduling result" as an operation change content and updates A.

In Step 708, the solution forecast calculation part 118 determines whether or not x in A deadheads the crew. If determining that x in A deadheads the crew (708: YES), the solution forecast calculation part 118 advances to Step 709. On the other hand, if determining that x in A does not deadheads the crew (708: NO), the solution forecast calculation part 118 terminates this flow.

In Step 709, the solution forecast calculation part 118 extracts "cancellation of deadheading of the crew in Y by x and setting of the crew in Y to work on x" as an operation change content and updates A. The solution forecast calculation part 118 then terminates this flow.

### Flow Example 6

Fig. 8 is a flowchart showing an example of the identification processing by the stuck rescheduling proposal identification part 121, or the "stuck rescheduling proposal identification processing" in Step 205 in Fig. 2. This is processing of calculating whether or not there is a solution by relaxing one or more constraint conditions in the case where there is no feasible solution in the rescheduling processing in Step 404 in the solution forecast calculation processing in Step 203. It involves executing the following processing until a feasible solution is obtained or all the constraint conditions are relaxed (801).

In Step 802, the stuck rescheduling proposal identification part 121 selects a constraint condition to be relaxed. The constraint condition to be relaxed may be selected by receiving an input from the user in advance or automatically selected in accordance with the types of the remaining violations or the number of times the rescheduling processing is to be repeated. For example, in the automatic selection, a constraint condition is relaxed to permit allocation of a spare crew or increase in work hours (overtime work) of a crew if there is a train remaining to be allocated. If no feasible solution is found nonetheless and the stuck rescheduling proposal identification part 121 returns to this processing, a constraint condition is relaxed to permit temporary attendance of a crew, partial suspension, suspension or changing of the departure time. Also, if there remains a connection station violation, a constraint condition is relaxed to permit moving by a taxi or a train of a different company. If no feasible solution is found nonetheless and the stuck rescheduling proposal identification part 121 returns to this processing, a constraint condition is relaxed to permit introduction of an extra train, suspension or partial suspension. Also, if there remains an operation termination location violation and constraint conditions are relaxed one after another as described above, but no feasible solution is found nonetheless and the stuck rescheduling proposal identification part 121 returns to this processing, a constraint condition is relaxed to permit change of the operation termination location.

When a constraint condition to be relaxed is selected in above Step 802, the stuck rescheduling proposal identification part 121 advances to Step 803, in which it relaxes the constraint condition and reschedules the whole operation plan. In doing so, as in Step 404, fixing the change applied, focusing on the processing after Step 202, and the operation plan stored in determined operation plan table 114, the stuck rescheduling proposal identification part 121 reschedules the whole operation plan stored in the original operation plan table 109 in such a way as to solve the remaining violations. If evaluation indexes have been set, they are considered as in Step 404. Here, if there is a feasible solution, the stuck rescheduling proposal identification part 121 advances to Step 805. If there is no feasible solution, the stuck rescheduling proposal identification part 121 returns to Step 802 to further select a relaxable condition.

In Step 805, the stuck rescheduling proposal identification part 121 determines whether or not there is a feasible solution. If determining that there is a feasible solution (805: YES), the stuck rescheduling proposal identification part 121 advances to Step 806, in which it identifies the change proposal as one with a feasible solution. On the other hand, if determining that there is no feasible solution (805: NO), the stuck rescheduling proposal identification part 121 advances to Step 808, in which it identifies the change proposal as one with no feasible solution.

In Step 807, the stuck rescheduling proposal identification part 121 calculates a forecast of solution. This processing is similar to the processing in Step 406 and Step 407 and extracts the contents of operation changes and/or train timetable changes as the forecast of solution. In the extraction, if any constraint condition relaxed in Step 802 is related to any of the change contents, the stuck rescheduling proposal identification part 121 extracts the change contents along with the relaxed constraint condition. For example, in a case where "change of the departure time of the train 1" is extracted, it is extracted along with a relaxing condition "permitting change of the departure time".

In Step 809, the stuck rescheduling proposal identification part 121 refers to the usual practice table 111 to determine whether or not the change proposal of interest is a usual practice. Here, if the change proposal of interest is determined as a usual practice, information indicating that there is no feasible solution, i.e. "no prospect of solution" is displayed in Step 207. This shows the user that selecting the usual practice will lead to a dead end, and thus functions to prevent a manual change.

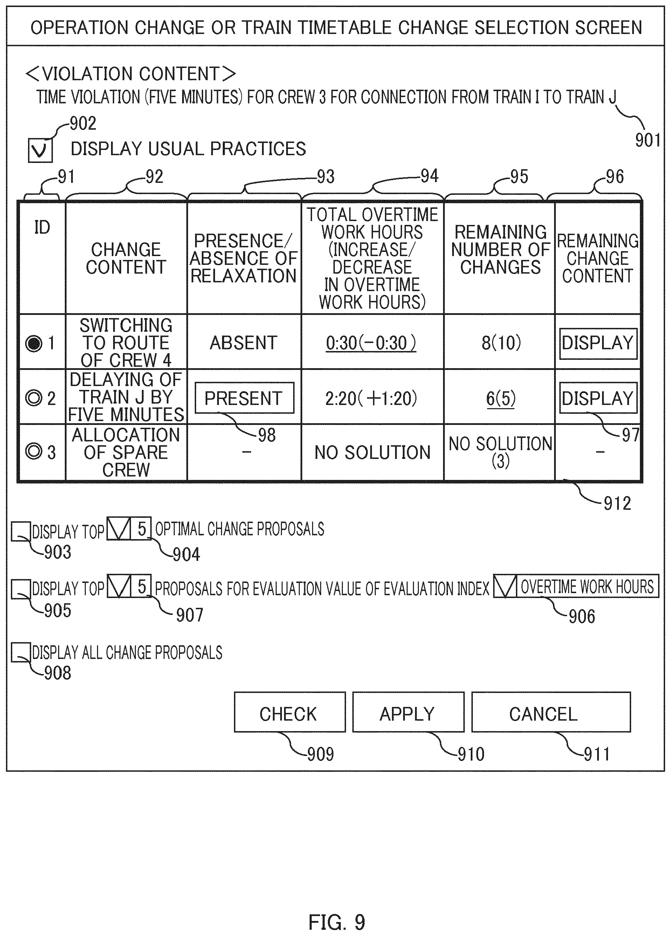

Fig. 9 is a diagram showing an example of display of change proposals. This is a diagram showing an example of a screen displaying operation change or train timetable change proposals according to this embodiment. It is a screen displaying in Step 207 the result of the processing in Step 201 to Step 206 upon an input selecting a violation to be solved from the user through the input device 103 of the resource operation planning assist apparatus 101. In Fig. 9, violation content 901 represents the content of the violation to be solved selected by the user. In this example, the violation content 901 indicates the content of a violation "time violation (five minutes) for the crew 3 for connection from the train I to the train J" as a result of selecting the violation mark 305 shown in Fig. 3. This means that "the route of the crew 3 lacks five minutes for connection from the train I to the train J and the crew 3 cannot therefore work on the train J". Also, a check box 902 is a check box for the user to input a setting as to whether or not to display usual practices as change proposals. Upon checking the check box 902, the resource operation planning assist apparatus 101 refers to the usual practice table 111 to extract usual practices corresponding to the violation content 901, and displays forecasts of solution and predictive values of some or all of the evaluation indexes for a list of the corresponding change proposals as shown in a table 912 along with information indicating whether one or more constraint conditions have been relaxed in the calculation of the forecasts of solution.

Also, ID 91 represents change proposal IDs and displays radio buttons with which to select the respective change proposal IDs. Change content 92 describes the contents of operation change or train timetable change proposals against the selected violation. For example, the "change content" of the change proposal under an "ID" of "1" (Change Proposal 1) is "switching to the route of the crew 4"; the "change content" of the change proposal under an "ID" of "2" (Change Proposal 2) is "delaying of the train J by five minutes", i.e. "changing of the departure time of the train J (delaying by five minutes)"; and the "change content" of the change proposal under an "ID" of "3" (Change Proposal 3) is "allocation of a spare crew". Presence/absence of relaxation 93 describes whether or not one or more constrain conditions are relaxed in the rescheduling by the solution forecast calculation part 118 or the stuck rescheduling proposal identification part 121 in which the change shown under the change content 92 is applied to the selected violation.

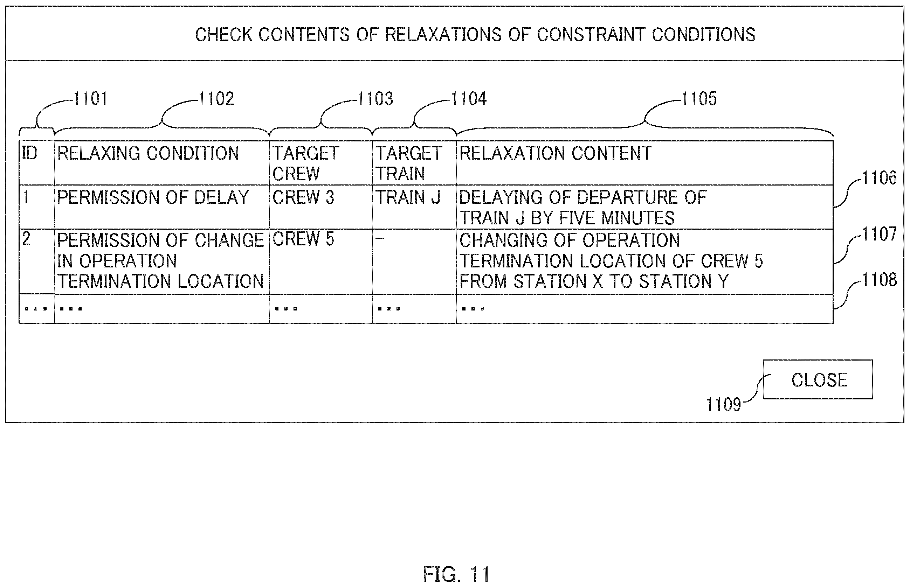

For example, the "presence/absence of relaxation" for the change proposal under the "ID" of "1" is "absent", meaning that no constraint is relaxed, while the "presence/absence of relaxation" for the change proposal under the "ID" of "2" is "present", meaning that one or more constraint conditions are relaxed. Here, in the case where the presence/absence of relaxation 93 is "present" as shown by reference sign 98, the resource operation planning assist apparatus 101 outputs a screen for checking details of the relaxed constraint conditions as shown in Fig. 11 when the user presses the "present" button. Details will be described later with reference to Fig. 11.

Also, total overtime work hours (increase/decrease in overtime work hours) 94 indicate the total of the overtime work hours of all the crews after the execution of the change content 92 and then the rescheduling of the whole operation plan, and the amount of time increased or decreased from the total overtime work hours upon the execution of the change content 92. As these values, the values calculated in Step 206 are used. For example, the "total overtime work hours" for the change proposal under the "ID" of "1" is "0 hour and 30 minutes" and the "increase/decrease in overtime work hours" is "-30 minutes"; and the "total overtime work hours" for the change proposal under the "ID" of "2" is "2 hours 20 minutes" and the "increase/decrease in overtime work hours" is "+1 hour and 20 minutes". The underline under the values of the total overtime work hours (increase/decrease in overtime work hours) 94 for Change Proposal 1 indicates that the values are more suitable than any of the values of the other change proposals.

Also, remaining number of changes 95 describes the remaining number of operation changes or train timetable changes necessary after the execution of the change content 92. As this value, the value calculated in Step 407 or Step 807 is used. In this example, the "remaining number of changes" for the change proposal under the "ID" of "1" is "8", and the "remaining number of changes" for the change proposal under the "ID" of "2" is "6". Also, the remaining number of violations after the execution of the change proposal is described in parenthesis. In this example, Change Proposal 1 indicates that 10 violations will remain after the execution of the change content 92 "switching to the route of the crew 4" and that the number of operation changes or train timetable changes necessary for solving these violations is 8. Also, Change Proposal 2 indicates that five violations will remain after the execution of the change content 92 "delaying of the train J by five minutes" and that the number of operation changes or train timetable changes necessary for solving these violations is six. The underline under this item too indicates that the values are more suitable than any of the values of the other change proposals.

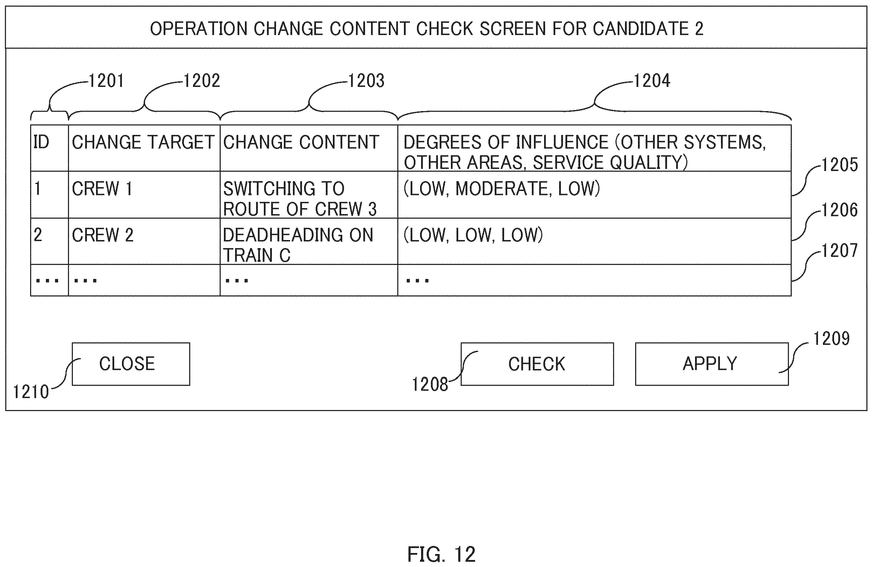

Also, remaining change content 96 displays buttons 97 for the rescheduling content display part 122 to display the contents of the remaining operation changes or train timetable changes necessary after the execution of the change content 92 in the case where the solution forecast calculation part 118 or the stuck rescheduling proposal identification part 121 finds that there is a feasible solution, i.e. there is a "prospect of solution". A change content detail check screen as shown in Fig. 12 appears when any of the display buttons 97 is pressed. Details will be described later with reference to Fig. 12.

Meanwhile, Change Proposal 3 is an example of display of a change proposal determined by the stuck rescheduling proposal identification part 121 as a usual practice with no feasible solution. This change proposal indicates that selecting it will not solve subsequent violations. With no feasible solution, "no solution" is displayed for the items that cannot be calculated, in this example, the total overtime work hours (increase/decrease in overtime work hours) 94 and the remaining number of changes 95. Also, "-" is displayed for the presence/absence of relaxation 93 and the remaining change content since there is nothing to describe. A value is displayed for the remaining number of violations since it can be calculated. This example indicates that the remaining number of violations will be three upon "allocation of a spare crew" but there will be not be practices that solve all of these violations.

Also, a check box 903 is a check box for the user to input a setting as to whether or not to display change proposals with which the solution forecast calculation part 118 or the stuck rescheduling proposal identification part 121 has calculated rescheduling results such that the values of evaluation indexes to be considered, if set and registered as user inputs in the evaluation index table 113, are optimized. When the check box 903 is checked, a given number of change proposals designated by the user with a combo box 904 are displayed in descending order based on an optimal value. The display method is similar to that of the table 912.

Also, a check box 905 is a check box for the user to input a setting as to whether or not display change proposals with good evaluation values of an evaluation index designated by the user with a combo box 906. When the check box 905 is checked, a given number of change proposals designated by the user with a combo box 907 are displayed in descending order of the value of the evaluation index designated with the combo box 906. The display method is similar to that of the table 912.

Also, a check box 908 is a check box for the user to input a setting as to whether or not to display all the possible change proposals. When the check box 908 is checked, the usual practices and all the change proposals found to have solutions (prospects of solution) by the solution forecast calculation part 118 or the stuck rescheduling proposal identification part 121 are displayed along with their respective forecasts of solution and predictive evaluation values. The display method is similar to that of the table 912.

Also, a check button 909 is a button for the user to check the content of the change proposal whose radio button has been selected by a user input. When the check button 909 is pressed, an operation plan with the change proposal applied thereto is displayed on the screen shown in Fig. 3. An apply button 910 is a button for the user to apply the change proposal whose radio button has been selected by a user input. It is a button for the user to press when deciding after the check to apply the change proposal as an operation change or train timetable change against the violation content 901. Pressing the apply button 910 fixes the change. A cancel button 911 is a button to be pressed to close this screen without applying any of the change proposals.

### Flow Example 7

Fig. 10 is a flowchart showing an example of the processing to be executed by the change proposal display part 119, or the "change proposal display processing" in Step 207 in Fig. 2, i.e. processing of displaying change proposals on the displayed screen shown in Fig. 9.

In Step 1001, the change proposal display part 119 determines whether or not there is an input to display usual practices, that is, whether or not the check box 902 is checked. If determining that there is an input to display usual practices (1001: YES), the change proposal display part 119 advances to Step 1002. On the other hand, if determining that there is no input to display usual practices (1001: NO), the change proposal display part 119 advances to Step 1004.

In Step 1002, the change proposal display part 119 refers to the usual practice table 111 to determine whether or not there are any usual practices against the violation to be solved. If determining that there are usual practices against the violation to be solved (1002: YES), the change proposal display part 119 advances to Step 1003. On the other hand, if determining that there is no usual practice against the violation to be solved (1002: NO), the change proposal display part 119 advances to Step 1004.

In Step 1003, the change proposal display part 119 displays change proposals corresponding to the usual practices and stored in the proposed operation plan information table 115, along with their forecasts of solution and predictive evaluation values. Note that any change proposals determined as usual practices with no feasible solution by the stuck rescheduling proposal identification part 121 are displayed in such a way as to indicate that selecting these change proposals will not solve subsequent violations, as mentioned earlier.

In Step 1004, the change proposal display part 119 determines whether or not there is an input to display optimal change proposals, that is, whether or not the check box 903 is checked. If determining that there is an input to display optimal change proposals (1004: YES), the change proposal display part 119 advances to Step 1005. On the other hand, if determining that there is no input to display optimal change proposals (1004: NO), the change proposal display part 119 advances to Step 1009.

In Step 1005, the change proposal display part 119 determines whether or not evaluation indexes to be considered are inputted, that is, whether or not evaluation indexes to be considered are set and registered as user inputs in the evaluation index table 113. If determining that evaluation indexes to be considered are inputted (1005: YES), the change proposal display part 119 advances to Step 1006. On the other hand, if no evaluation index to be considered is inputted (1005: NO), the change proposal display part 119 advances to Step 1009.

In Step 1006, the change proposal display part 119 determines whether or not weights are inputted. If determining that weights are inputted (1006: YES), the change proposal display part 119 advances to Step 1007. On the other hand, if determining that no weight is inputted (1006: NO), the change proposal display part 119 advances to Step 1008.

In Step 1007, the change proposal display part 119 extracts the designated number (the number designated with the combo box 904) of change proposals with rescheduling results whose predictive values of the inputted evaluation indexes are close to the inputted weights among the change proposals stored in the proposed operation plan information table 115, and displays them along with their forecasts of solution and predictive evaluation values.

In Step 1008, the change proposal display part 119 extracts the designated number (the number designated with the combo box 904) of change proposals with rescheduling results having the highest predictive values of each considered evaluation index inputted among the change proposals stored in the proposed operation plan information table 115, and displays them along with their forecasts of solution and predictive evaluation values.

In Step 1009, the change proposal display part 119 determines whether or not there is an input to display top proposals, that is, whether or not the check box 905 is checked. If determining that there is an input to display top proposals (1009: YES), the change proposal display part 119 advances to Step 1010. On the other hand, if determining that there is no input to display top proposals (1009: NO), the change proposal display part 119 advances to Step 1011.

In Step 1010, the change proposal display part 119 displays the designated number (the number designated with the combo box 905) of change proposals with rescheduling results having the highest predictive values of the designated evaluation index (the evaluation index designated and inputted with the combo box 906) among the change proposals stored in the proposed operation plan information table 115, along with their forecasts of solution and predictive evaluation values.

In Step 1011, the change proposal display part 119 determines whether or not there is an input to display all the change proposals, that is, whether or not the check box 908 is checked. If determining that there is an input to display all the change proposals (1011: YES), the change proposal display part 119 advances to Step 1012. On the other hand, if determining that there is no input to display all the change proposals (1011: NO), the change proposal display part 119 terminates the flow.

In Step 1012, the change proposal display part 119 displays the usual practices and all the change proposals with prospects of solution among the change proposals stored in the proposed operation plan information table 115, along with their forecasts of solution and predictive evaluation values, and terminates the flow.

Fig. 11 is a diagram showing an example of display of the contents of relaxation of constraint conditions. This is a diagram showing an example of a screen displaying relaxing conditions and displayed upon click on the "present" button 98 under the presence/absence of relaxation 93 in the change disposal display example according to this embodiment. As the displayed contents, used are conditions relaxed for change proposals identified by the stuck rescheduling proposal identification part 121 as ones with feasible solutions and the contents of the relaxation. These conditions and contents are extracted from the proposed operation plan information table 115.

In this Fig. 11, ID 1101 represents relaxation content IDs, a row 1106 is a description on an "ID" of "1 ", and a row 1107 is a description on an "ID" of "2". Also, relaxing condition 1102 describes the contents of relaxed constraint conditions. For example, the "relaxing condition" under the "ID" of "1" is "permission of delay", and the "relaxing condition" under the "ID" of "2" is "permission of change in the operation termination location".

Target crew 1103 describes crew numbers for which constraint conditions are relaxed. For example, the "target crew" under the "ID" of "1" is the "crew 3", and the "target crew" under the "ID" of "2" is a "crew 5".

Also, target train 1104 describes train numbers for which constraint conditions are relaxed. For example, the "target train" under the "ID" of "1" is the "train J", and the "target train" under the "ID" of "2" is "-", i.e. "no target train".

Also, relaxation content 1105 describes the contents of the relaxation. For example, the "relaxation content" under the "ID" of "1" is "delaying of the departure of the train J by five minutes", and the "relaxation content" under the "ID" of "2" is "changing of the operation termination location of the crew 5 from station X to station Y".

Also, a button 1109 is a button for closing this screen. This screen is closed when the user presses the button 1109.

Fig. 12 is a diagram showing an example of display of a forecast of solution (operation change contents or train timetable changes). This is a diagram showing an example of a screen displaying operation change or train timetable change contents and displayed upon click on a "display" button 97 under the remaining change content 96 in the change proposal display example according to this embodiment. As the displayed contents, used are operation change contents or train timetable changes calculated by the solution forecast calculation part 118 or the stuck rescheduling proposal identification part 121 and extracted from the proposed operation plan information table 115.

In this case, ID 1201 represents change content IDs, a row 1205 is a description on an "ID" of "1", and a row 1206 is a description on an "ID" of "2". Also, change target crew 1202 describes crew numbers for which operation changes are made. For example, the "change target crew" under the "ID" of "1" is the "crew 1", and the "change target crew" under the "ID" of "2" is the "crew 2".

Also, change content 1203 describes operations change or train timetable change contents. For example, the "change content" under the "ID" of "1" is "switching to the route of the crew 3", and the "change content" under the "ID" of "2" is "deadheading on the train C".

Degrees of influence (other systems, other areas, service quality) 1204 describes the degrees of influence on other systems, other areas, service quality, and the like. For example, the "degrees of influence (other systems, other areas, service quality)" under the "ID" of "1" are "(low, moderate, low)", meaning that the influence on other systems and the influence on the service quality are both low while the influence on other areas is moderate. The "degrees of influence (other systems, other areas, service quality)" under the "ID" of "2" are "(low, low, low)", meaning that the influences on other systems, other areas and the service quality are all low. The influence on other systems is, for example, "high" if the change content 1203 is a train timetable change, "low" if the change content 1203 is an operation change, and "moderate" if the change content 1203 requires communication with two or more locations. The influence on other areas is "moderate" if the change target crew 1202 belongs to a different area and "low" if the change target crew 1202 belongs to his/her own area. The influence on the service quality is, for example, "low" if there is no influence on the original train timetable, "moderate" if a delay occurs, and "high" if a suspension occurs. Note that the IDs under the ID 1201 are set in descending order of the first departure time of the train related to the change content, and the pieces of information are displayed in this order of the IDs under the ID 1201.

Also, a button 1208 is a button for checking. Specifically, when the user selects a change content displayed and presses the check button 1208, the resource operation planning assist apparatus 101 displays on the screen shown in Fig. 3 an operation plan to which are applied the corresponding change shown under the change content 92 and all the changes from the change under the ID 1201 of 1 to the selected change.

Also, a button 1209 is a button for the user to apply the changes down to the change selected upon the user input. It is a button for the user to press when deciding after the check to apply the operation changes or train timetable changes down to the selected row. Pressing the apply button 1209 fixes the changes. A button 1210 is a button to be pressed to close this screen without applying any of the changes shown on this screen.

Fig. 13 is a diagram showing an example of an evaluation index input screen. This is a diagram showing an example of an input screen related to evaluation indexes according to this embodiment. ID 1301 represents evaluation index IDs, a row 1307 is a description on an "ID" of "1", and a row 1308 is a description on an "ID" of "2". Evaluation index 1302 describes the names of the evaluation indexes. For example, the "evaluation index" under the "ID" of "1" is "total overtime work hours", and the evaluation index" under the "ID" of "2" is "spare crew absence time". Display of increase/decrease 1303 describes whether or not to cause the change proposal display part 119 to display the increase or decrease in value of the evaluation index shown under the evaluation index 1302 that results from the execution of the change against the selected violation. For example, the "display of increase/decrease" under the "ID" of "1" is "display", and the "display of increase/decrease" under the "ID" of "2" is "hide".

Also, display of predictive value 1304 describes whether or not to cause the change proposal display part 119 to display the predictive values calculated from the results of the rescheduling by the solution forecast calculation part 118 or the stuck rescheduling proposal identification part 121. For example the "display of predictive value" under the "ID" of "1" is "display", and the "display of predictive value" under the "ID" of "2" is "hide".

Also, consideration in proposal 1305 describes whether or not it is necessary to consider the evaluation index in the creation of rescheduling proposals by the solution forecast calculation part 118 or the stuck rescheduling proposal identification part 121. For example, the "consideration in proposal" under the "ID" of "1" is "necessary", and the "consideration in proposal" under the "ID" of "2" is "necessary".

Also, weight 1306 describes a weight in the case where the consideration in proposal 1305 indicates that it is necessary to consider the evaluation index. For example, the "weight" under the "ID" of "1" is "0.8", and the "weight" under the "ID" of "2" is "0.2". The user selects between the two choices for each of the display of increase/decrease 1303, the display of predictive value 1304 and the consideration in proposal 1305 with a combo box.

Numerical values are inputted for the weight 1306. After inputting the contents into this screen, the user presses a set button 1310, so that the set contents are stored in the evaluation index table 113. Meanwhile, when a close button 1311 is pressed, the resource operation planning assist apparatus 101 closes this screen without reflecting the inputted contents on the evaluation index table 113. Although only the total overtime work hours and the spare crew absence time are described in this example, other conceivable evaluation indexes can all be set on this screen. The evaluation indexes are received through the input device 103 or set in advance by means of definition files or the like.

Note that the present invention is not limited to the above embodiment but includes various modifications. For example, the above embodiment has been described in detail for the purpose of comprehensibly describing the present invention, but is not necessarily limited to including all the components described. Further, some of the components in the embodiment can be replaced with components in another embodiment or components of a resource operation planning assist apparatus therein. Furthermore, other components can be added as or replaced with some of the components in the embodiment, and/or some of the components in the embodiment can be removed.

Also, some or all of the above components, functions, processing parts, processing units and the like may be implemented by means of hardware by, for example, designing them with integrated circuits. Alternatively, the above components, functions and the like may be implemented by means of software by a processor interpreting programs implementing the respective functions and executing them. The information of the programs, tables, files and the like for implementing the functions can be stored in a record device such as a memory, a hard disk drive or an SSD (Solid State Drive) or a record medium such as an IC card, an SD card or a DVD.

Also, the control lines and information lines shown are line considered necessary for description.

Due to the nature of the product, not all the control lines and information lines may necessarily be shown. Almost all the components may be considered actually coupled to each other.

In this embodiment, the crew operation planning assist apparatus handling railway crews as resources has been described as an exemplary target of application of the present invention. However, the present invention may be applied to the cars of trains. In this case, it is possible to prevent a dead end in rescheduling and also select a change proposal that allows quick inconsistency solution. Hence, compositions can be operated efficiently, which leads to energy saving.

### Another Embodiment

In the above embodiment, the instance has been presented in which change proposals are created against one violation selected by the user. In another embodiment, an instance will be described in which a resource operation planning assist apparatus 101 creates a plurality of change proposals against all of detected violations.

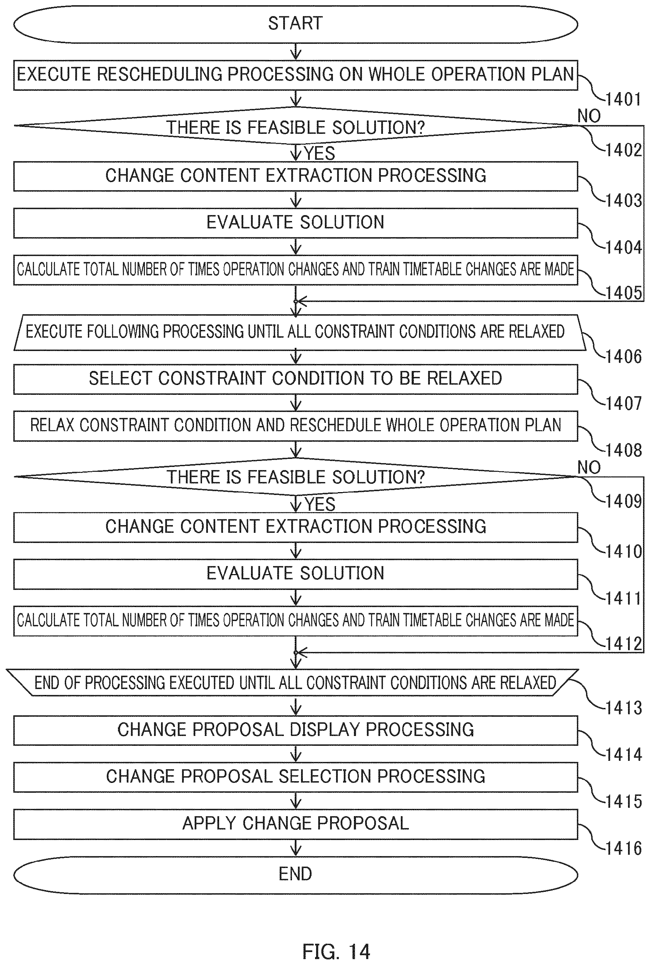

Fig. 14 is a flowchart showing a basic procedure of processing by the resource operation planning assist apparatus 101 according to the other embodiment.

In this case, in Step 1401, a change proposal listing part 117 of the resource operation planning assist apparatus 101 executes rescheduling processing for solving all violations in an operation plan. This step is processing in which the change proposal listing part 117 lists change proposals. Also, the content of the processing is similar to the processing in Step 404, and description thereof will therefore be omitted.

In Step 1402, the resource operation planning assist apparatus 101 determines whether or not there is a feasible solution in the result of above Step 1401. If determining that there is a feasible solution (1402: YES), the resource operation planning assist apparatus 101 advances to Step 1403. On the other hand, if determining that there is no feasible solution (1402: NO), the resource operation planning assist apparatus 101 advances to Step 1406.

In Step 1403, a solution forecast calculation part 118 executes change content extraction processing. The content of the processing is similar to that in Step 406, and description thereof will therefore be omitted.

In Step 1404, an evaluation part 120 evaluates the solution. The content of this processing is basically similar to the processing in Step 206, except that this embodiment adds calculation of "degree of violation", for example. The degree of violation is a value indicating the degree of violation of one or more constraint conditions included in the solution.

For example, the degree of violation is calculated as "the degree of importance of a violated constraint condition x the amount of the violation", "the number of violated constraint conditions" or the like. "The degree of importance of a violated constraint condition" in the former case is received through an input device 103 or set in advance by means of a definition file or the like. "The amount of the violation" is calculated as the number of occurrences of the violation or the degree of deviation from a numerical value specified for the constraint condition, and is defined for each constraint condition.

For example, "the amount of the violation" for a constraint "keeping to the previously planned departure time at each station" is a value obtained by calculating "the planned departure time (the departure time in an original operation plan table 109) - the departure time in the feasible solution (the departure time in a proposed operation plan information table 115)" for each station and summing the values thus calculated. Also, the amount of the violation for a constraint "keeping the same operation termination location as previously planned" is "the number of crews whose previously planned operation termination locations in the original operation plan table 109 differ from their operation termination locations in the feasible solution in the proposed operation plan information table 115".

In Step 1405, the solution forecast calculation part 118 calculates the total number of times operation changes and train timetable changes are made. This step is similar to Step 407, and description thereof will therefore be omitted.

From Step 1407 to Step 1412, the solution forecast calculation part 118 iterates its processing until all the constraint conditions are relaxed. Among these, in Step 1407, the solution forecast calculation part 118 selects a constraint condition to be relaxed. This Step is similar to Step 802, and description thereof will therefore be omitted.

Then in Step 1408, the solution forecast calculation part 118 relaxes the constraint condition selected in Step 1407 and reschedules the whole operation plan. The content of this processing is similar to that in Step 803, and description thereof will therefore be omitted.

In Step 1409, the solution forecast calculation part 118 determines whether or not there is a feasible solution in the result of Step 1408. If determining that there is a feasible solution (1409: YES), the solution forecast calculation part 118 advances to Step 1410. On the other hand, if determining that there is no feasible solution (1409: NO), the solution forecast calculation part 118 returns to Step 1407 on condition that there is still a constraint condition yet to be relaxed; otherwise, the solution forecast calculation part 118 advances to Step 1414.

In Step 1410, the solution forecast calculation part 118 executes change content extraction processing. This step is similar to Step 1403, i.e. Step 406, and description thereof will therefore be omitted.

In Step 1411, the evaluation part 120 evaluates the solution. This step is similar to Step 1404, and description thereof will therefore be omitted.

In Step 1412, the solution forecast calculation part 118 calculates the total number of times operation changes and train timetable changes are made. This step is similar to Step 1405, i.e. Step 407, and description thereof will therefore be omitted.

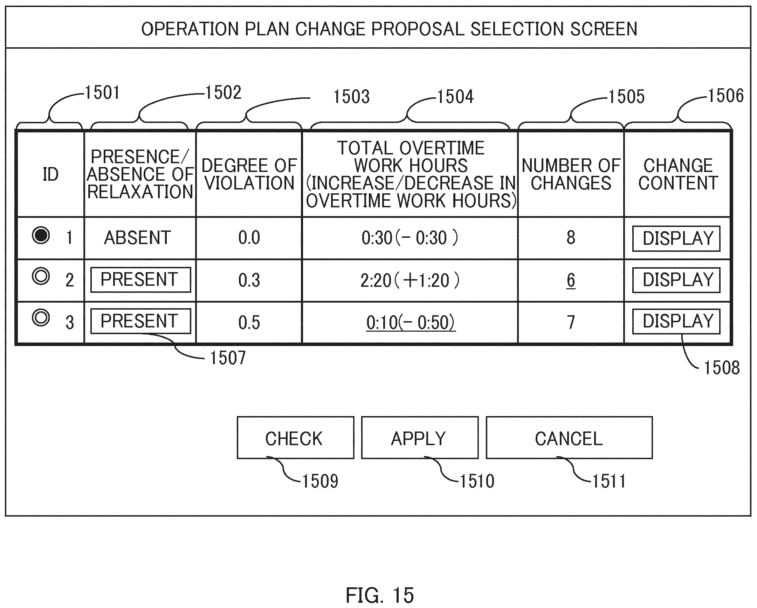

In Step 1414, a change proposal display part 119 executes change proposal display processing. Fig. 15 shows an example of the display. The displayed contents will be described later with reference to Fig. 15.

In Step 1415, the resource operation planning assist apparatus 101 executes change proposal selection processing. The user selects a change to be applied among the change proposals for the operation plan displayed by the change proposal display part 119 and the rescheduling content display part 122 in Step 1414 by reference to their forecasts of solution, evaluation values and the like. Then in Step 1416, the resource operation planning assist apparatus 101 applies the change proposal selected by the user to the operation plan.

Fig. 15 is a diagram showing a screen for selecting a change proposal for the operation plan. This is a diagram showing an example of an operation change proposal display screen according to this embodiment. In the example of Fig. 15, ID 1501, presence/absence of relaxation 1502, total overtime work hours (increase/decrease in overtime work hours) 1504, number of changes 1505 and change content 1506 are displayed contents similar to the ID 91, the presence/absence of relaxation 93, the total overtime work hours (increase/decrease in overtime work hours) 94, the remaining number of changes 95 and the remaining change content 96, respectively. Likewise, buttons 1507, 1508, 1509, 1510 and 1511 are buttons for displaying contents and executing processing similar to those by the buttons 98, 97, 909, 910 and 911, respectively.

On the other hand, degree of violation 1503 indicates the degrees of violation calculated in above Step 1404 and Step 1411. In a case where no constraint condition has been relaxed, all the constraint conditions have been satisfied, and the degree of violation is "0.0". On the other hand, in a case where one or more constraint conditions have been relaxed, the degree of violation is a numerical value such as "0.3" or "0.5" in accordance with the degree of importance of the violated constraint conditions, the amount thereof, and the like. Alternatively, only the number of violated constraint conditions may be used to indicate the degree of violation with an expression such as "1 (number of violated constraint conditions) / 6 (total number of constraint conditions)".

The best modes for carrying out the present invention and other matters have been described above in detail, but the present invention is not limited to these. Various changes can be made without departing from the gist of the present invention.

According to each of these embodiments, proposals of solution to inconsistencies in a resource operation plan can be outputted along with forecasts of the inconsistency-solved state and predictive values of one or more predetermined evaluation indexes.

From what is described in this description, at least the following matters will be clear. Specifically, the resource operation planning assist apparatus according to each embodiment may be such that, if an inconsistency to which a change proposal is not applicable is present in an operation plan in determination of success or failure in inconsistency solution, a processor specifies a change proposal for the whole operation plan for solving the inconsistency, by using a predetermined algorithm, and determines success or failure in the inconsistency solution for the specified change proposal.

In the case where a plurality of inconsistencies are present, solving some of the inconsistencies leaves the other inconsistencies, thereby failing in the inconsistency solution in the whole operation plan. However, with the above, this situation can be handled and hence proper information can be presented to the user. Furthermore, the efficiency of creation of a resource operation plan is enhanced, and a preferable operation plan suitable for the actual present situation is created, which makes the resource operation more efficient. In addition, the efficiency and load of information processing at each system for the resource operation are improved as well (these advantageous effects for information processing technology are similarly achieved by the following as well).

Also, the resource operation planning assist apparatus according to each embodiment may be such that the processor further executes processing of specifying information containing at least one of the number of times the operation plan needs to be changed after the application of the change proposal for the whole operation plan and the content of the change, along with specification of the change proposal, and outputting the specified information to a predetermined device.

This makes it possible to present not only success or failure in the inconsistency solution but also forecasts of change in the operation plan that is required for the solution.

Also, the resource operation planning assist apparatus according to each embodiment may be such that, if the inconsistency solution is determined as failure for the change proposal, the processor further executes processing of relaxing a preset relaxable constraint condition in constraint information on the operation plan to specify a change proposal capable of the inconsistency solution, by using a predetermined algorithm, and outputting the specified change proposal and the content of the relaxation of the constraint condition to the predetermined device.

This makes it possible to efficiently avoid a situation where the inconsistency solution is failed, i.e. no solution for the resource operation plan.

Also, the resource operation planning assist apparatus according to each embodiment may be such that a storage device further stores a usual practice table storing change proposals used with a predetermined frequency or higher against inconsistencies, and if failing to specify any change proposal capable of the inconsistency solution even after the relaxation of the constraint condition, the processor further executes processing of determining whether or not the change proposal is a usual practice based on the usual practice table, and outputting the change proposal as a change proposal with no solution to an output device if the change proposal is one of the usual practices.

This makes it possible to explicitly indicate to the user who is a person in charge of planning the resource operation or the like that the current inconsistencies cannot be settled by selecting a change proposal the user is liable to select, i.e. a usual practice.

Also, the resource operation planning assist apparatus according to each embodiment may be such that, in the specification of the change proposal, the processor receives a weight of each of evaluation indexes to be used for evaluation of the change proposal from a user through an input device, and the processor uses the weight to specify the change proposal in the determination of success or failure in the inconsistency solution.

This makes it possible for the user to designate the relative degrees of importance of evaluation indexes such as train timetable delay and crews' overtime work hours. This in turn makes it possible to accurately create a resource operation plan desired by the user.

Also, the resource operation planning assist apparatus according to each embodiment may be such that the processor computes a predictive value of an evaluation index to be used for evaluation of the change proposal, by using a predetermined algorithm, the predictive value indicating a value predicted with the application of the change proposal, and outputs the predictive value to the predetermined device along with the change proposal.

This makes it possible to present to the user whether the above evaluation index has a preferable value or not for each change proposal as preferable information for selecting a change proposal.

Also, the resource operation planning assist apparatus according to each embodiment may be such that, for each of a plurality of the inconsistencies, the processor further executes processing of outputting the content of the change proposal against the inconsistency to the predetermined device.

This makes it possible for the user to clearly understand each of the contents of the change proposals for the inconsistencies.

Also, the resource operation planning assist apparatus according to each embodiment may be such that, for each of the change proposals against the inconsistencies, the processor further executes processing of computing the degree of influence on a preset matter by using a predetermined algorithm, and outputting information on the degree of influence to the predetermined device along with the change proposal.

This makes it possible to present the influence of the application of the change proposal to the user as reference information for selecting the change proposal. Hence, the accuracy of the selection can be enhanced.

Also, the resource operation planning assist apparatus according to each embodiment may be such that the processor further executes processing of outputting, to the predetermined device, information on a selected event selected by the user through the input device for each inconsistency regarding a relation between the change proposal and another change proposal specified along with the change proposal for solving the inconsistency.

In this way, in a case where a plurality of inconsistencies are present, it is possible to clearly indicate the correspondence between a series of inconsistencies and change proposals such as an inconsistency and a change proposal applied thereto, and an inconsistency that may possibly result therefrom and a change proposal that the user further selects for this inconsistency.

Also, the resource operation planning assist apparatus according to each embodiment may be such that the processor further executes processing of determining the order of display of a plurality of the change proposals against the specified inconsistency based on at least any of the magnitude of frequency of use and the magnitude of a predetermined one or all of evaluation indexes, and outputting the order to the predetermined device.

This makes it easier for the user to check the change proposals in the order based on how frequently each change proposal is used and/or how high its evaluation index(es) is(are).

Also, the resource operation planning assist method according to each embodiment may be such that, if an inconsistency to which a change proposal is not applicable is present in an operation plan in determination of success or failure in inconsistency solution, an information processor is caused to specify a change proposal for the whole operation plan for solving the inconsistency, by using a predetermined algorithm, and determine success or failure in the inconsistency solution for the specified change proposal.

Also, the resource operation planning assist method according to each embodiment may be such that the information processor is caused to further execute processing of specifying information containing at least one of the number of times the operation plan needs to be changed after the application of the change proposal for the whole operation plan and the content of the change, along with specification of the change proposal, and outputting the specified information to a predetermined device.

Also, the resource operation planning assist method according to each embodiment may be such that, if the inconsistency solution is determined as failure for the change proposal, the information processor is caused to further execute processing of relaxing a preset relaxable constraint condition in constraint information on the operation plan to specify a change proposal capable of the inconsistency solution, by using a predetermined algorithm, and outputting the specified change proposal and the content of the relaxation of the constraint condition to the predetermined device.

Also, the resource operation planning assist method according to each embodiment may be such that a storage device further stores a usual practice table storing change proposals used with a predetermined frequency or higher against inconsistencies, and if failing to specify any change proposal capable of the inconsistency solution even after the relaxation of the constraint condition, the information processor is caused to further execute processing of determining whether or not the change proposal is a usual practice based on the usual practice table, and outputting the change proposal as a change proposal with no solution to an output device if the change proposal is one of the usual practices.

Also, the resource operation planning assist method according to each embodiment may be such that, in the specification of the change proposal, the information processor is caused to receive a weight of each of evaluation indexes to be used for evaluation of the change proposal from a user through an input device, and the information processor is caused to use the weight to specify the change proposal in the determination of success or failure in the inconsistency solution.

Also, the resource operation planning assist method according to each embodiment may be such that the information processor is caused to compute a predictive value of an evaluation index to be used for evaluation of the change proposal, by using a predetermined algorithm, the predictive value indicating a value predicted with the application of the change proposal, and output the predictive value to the predetermined device along with the change proposal.

Also, the resource operation planning assist method according to each embodiment may be such that, for each of a plurality of the inconsistencies, the information processor is caused to further execute processing of outputting the content of the change proposal against the inconsistency to the predetermined device.

Also, the resource operation planning assist method according to each embodiment may be such that, for each of the change proposals against the inconsistencies, the information processor is caused to execute processing of computing the degree of influence on a preset matter by using a predetermined algorithm, and outputting information on the degree of influence to the predetermined device along with the change proposal.

Also, the resource operation planning assist method according to each embodiment may be such that the information processor is caused to further execute processing of outputting, to the predetermined device, information on a selected event selected by the user through the input device for each inconsistency regarding a relation between the change proposal and another change proposal specified along with the change proposal for solving the inconsistency.

Also, the resource operation planning assist apparatus according to each embodiment may be such that the information processor is caused to further execute processing of determining the order of display of a plurality of the change proposals against the specified inconsistency based on at least any of the magnitude of frequency of use and the magnitude of a predetermined one or all of evaluation indexes, and outputting the order to the predetermined device.

## Claims

1. A resource operation planning assist apparatus (101) comprising:
a storage device (102) storing an operation plan of a resource for use in a predetermined business; and
a processor (105) configured to
specify a change proposal for the operation plan for solving an inconsistency contained in the operation plan, by using a predetermined algorithm,
determine success or failure in inconsistency solution in the operation plan with the change proposal applied thereto, by using a predetermined algorithm, and
output information on the change proposal and information on the success or failure in the inconsistency solution to a predetermined device.

2. The resource operation planning assist apparatus (101) according to claim 1, wherein, if an inconsistency to which the change proposal is not applicable is present in the operation plan in the determination of success or failure in the inconsistency solution, the processor (105)
specifies a change proposal for the whole operation plan for solving the inconsistency, by using a predetermined algorithm, and
determines success or failure in the inconsistency solution for the specified change proposal.

3. The resource operation planning assist apparatus (101) according to any one of the previous claims, wherein the processor (105) further executes processing of
specifying information containing at least one of the number of times the operation plan needs to be changed after the application of the change proposal for the whole operation plan and a content of the change, along with the specification of the change proposal, and
outputting the specified information to the predetermined device.

4. The resource operation planning assist apparatus (101) according to any one of the previous claims, wherein, if the inconsistency solution is determined as failure for the change proposal, the processor (105) further executes processing of
relaxing a preset relaxable constraint condition in constraint information on the operation plan to specify a change proposal capable of the inconsistency solution, by using a predetermined algorithm, and
outputting the specified change proposal and a content of the relaxation of the constraint condition to the predetermined device;
and optionally wherein
the storage device (102) further stores a usual practice table (111) storing change proposals used with a predetermined frequency or higher against inconsistencies, and
if failing to specify any change proposal capable of the inconsistency solution even after the relaxation of the constraint condition, the processor (105) further executes processing of
determining whether or not the change proposal is a usual practice based on the usual practice table (111), and
outputting the change proposal as a change proposal with no solution to an output device if the change proposal is one of the usual practices.

5. The resource operation planning assist apparatus (101) according to any one of the previous claims, wherein
in the specification of the change proposal, the processor (105) receives a weight of each of evaluation indexes to be used for evaluation of the change proposal from a user through an input device, and
the processor (105) uses the weight to specify the change proposal in the determination of success or failure in the inconsistency solution.

6. The resource operation planning assist apparatus (101) according to any one of the previous claims, wherein the processor (105)
computes a predictive value of an evaluation index to be used for evaluation of the change proposal, by using a predetermined algorithm, the predictive value indicating a value predicted with the application of the change proposal, and
outputs the predictive value to the predetermined device along with the change proposal.

7. The resource operation planning assist apparatus (101) according to any one of the previous claims, wherein, for each of a plurality of the inconsistencies, the processor (105) further executes processing of outputting a content of the change proposal against the inconsistency to the predetermined device;
and optionally wherein for each of the change proposals against the inconsistencies, the processor (105) further executes processing of
computing a degree of influence on a preset matter by using a predetermined algorithm, and
outputting information on the degree of influence to the predetermined device along with the change proposal.

8. The resource operation planning assist apparatus (101) according to any one of the previous claims, wherein the processor (105) further executes processing of
determining an order of display of a plurality of the change proposals against the specified inconsistency based on at least any of a magnitude of frequency of use and a magnitude of a predetermined one or all of evaluation indexes, and
outputting the order to the predetermined device.

9. A resource operation planning assist method comprising causing an information processor (101) including a storage device (102) storing an operation plan of a resource for use in a predetermined business, to
specify a change proposal for the operation plan for solving an inconsistency contained in the operation plan, by using a predetermined algorithm,
determine success or failure in inconsistency solution in the operation plan with the change proposal applied thereto, by using a predetermined algorithm, and
output information on the change proposal and information on the success or failure in the inconsistency solution to a predetermined device.

10. The resource operation planning assist method according to claim 9, wherein, if an inconsistency to which the change proposal is not applicable is present in the operation plan in the determination of success or failure in the inconsistency solution, the information processor (101) is caused to
specify a change proposal for the whole operation plan for solving the inconsistency, by using a predetermined algorithm, and
determine success or failure in the inconsistency solution for the specified change proposal.

11. The resource operation planning assist method according to claim 9 or 10, wherein the information processor (101) is caused to further execute processing of
specifying information containing at least one of the number of times the operation plan needs to be changed after the application of the change proposal for the whole operation plan and a content of the change, along with the specification of the change proposal, and
outputting the specified information to the predetermined device.

12. The resource operation planning assist method according to any one of claims 9 to 11, wherein, if the inconsistency solution is determined as failure for the change proposal, the information processor (101) is caused to further execute processing of
relaxing a preset relaxable constraint condition in constraint information on the operation plan to specify a change proposal capable of the inconsistency solution, by using a predetermined algorithm, and
outputting the specified change proposal and a content of the relaxation of the constraint condition to the predetermined device;
and optionally wherein
the storage device (102) further stores a usual practice table (111) storing change proposals used with a predetermined frequency or higher against inconsistencies, and
if failing to specify any change proposal capable of the inconsistency solution even after the relaxation of the constraint condition, the information processor (101) is caused to further execute processing of
determining whether or not the change proposal is a usual practice based on the usual practice table (111), and
outputting the change proposal as a change proposal with no solution to an output device if the change proposal is one of the usual practices.

13. The resource operation planning assist method according to any one of claims 9 to 12, wherein
in the specification of the change proposal, the information processor (101) is caused to receive a weight of each of evaluation indexes to be used for evaluation of the change proposal from a user through an input device, and
the information processor (101) is caused to use the weight to specify the change proposal in the determination of success or failure in the inconsistency solution.

14. The resource operation planning assist method according to any one of claims 9 to 13, wherein the information processor (101) is caused to
compute a predictive value of an evaluation index to be used for evaluation of the change proposal, by using a predetermined algorithm, the predictive value indicating a value predicted with the application of the change proposal, and
output the predictive value to the predetermined device along with the change proposal.

15. The resource operation planning assist method according to any one of claims 9 to 14, wherein, for each of a plurality of the inconsistencies, the information processor (101) is caused to further execute processing of outputting a content of the change proposal against the inconsistency to the predetermined device;
and optionally wherein, for each of the change proposals against the inconsistencies, the information processor (101) is caused to further execute processing of
computing a degree of influence on a preset matter by using a predetermined algorithm, and
outputting information on the degree of influence to the predetermined device along with the change proposal.

16. The resource operation planning assist method according to any one of claims 9 to 15, wherein the information processor (101) is caused to further execute processing of
determining an order of display of a plurality of the change proposals against the specified inconsistency based on at least any of a magnitude of frequency of use and a magnitude of a predetermined one or all of evaluation indexes, and
outputting the order to the predetermined device.
